# EUROPÄISCHE PATENTSCHRIFT

(11) **EP 2 060 804 B1**
(45) Veröffentlichungstag und Bekanntmachung des Hinweises auf die Patenterteilung: **22.09.2010**
(21) Anmeldenummer: 08018473.2
(22) Anmeldetag: 22.10.2008
(51) Int. Cl.: F16C 17/04, F16C 17/22, F16C 17/24, F16C 25/04, F16C 33/10, F01D 25/16, F16J 15/34

(54) **Axialgleitlageranordnung**
Axial floating bearing assembly
Agencement de palier de coulissement axial

(30) Priorität: 19.11.2007 US 985919
(43) Veröffentlichungstag der Anmeldung: 20.05.2009
(73) Patentinhaber: BURGMANN AUTOMOTIVE GMBH, 82547 Eurasburg (DE)
(72) Erfinder: Clemens, Simon, 82319 Starnberg (DE); Feigl, Peter, 82335 Höhenrain (DE)
(74) Vertreter: Schaeberle, Steffen

(56) Entgegenhaltungen:
- EP-A- 0 035 891
- EP-A- 1 479 929
- FR-A- 1 550 906

## Beschreibung

Die Erfindung betrifft eine Axialgleitlageranordnung gemäß dem Oberbegriff des Patentanspruches 1. Sie betrifft insbesondere, jedoch nicht ausschließlich eine solche, die für die axiale Abstützung der Antriebswellen von Ladeverdichtern von Brennkraftmaschinen geeignet ist.

Für die axiale Abstützung und Abdichtung der Antriebswelle z.B. eines turbomechanisch angetriebenen Kreisel- oder Schraubenspindelverdichters oder Turboverdichters mit Abgasturbinenantrieb erfordern die besonderen Betriebsbedingungen bei derartigen Aggregaten entsprechende Beachtung. So weisen die Antriebswellen in der Regel einen geringen Durchmesser von häufig wesentlich weniger als 40 mm auf, und werden diese Wellen gleichzeitig mit sehr hohen Drehzahlen von z.B. 10⁵ min⁻¹ und mehr in Drehung gesetzt. Übliche Praxis war es bislang, den Funktionen "axiale Abstützung" und "Abdichtung" der Antriebswelle durch getrennte bauliche Maßnahmen Rechnung zu tragen. Die Dichtung kann seitens des Inneren des Verdichtergehäuses sowohl Über- als auch Unterdruckbedingungen ausgesetzt sein. Bei Ladeverstärkern sollte dabei gewährleistet sein, dass das abzudichtende gasförmige Medium, bei dem es sich in der Regel um Luft handelt, weitestgehend frei von nicht-gasförmigen Bestandteilen, wie Ölpartikel, gehalten ist, anderenfalls Ölreste in den Verbrennungsraum einer Brennkraftmaschine gelangen würden, die außer anderen nachteiligen Auswirkungen auf das Betriebsverhalten der Brennkraftmaschine eine Umweltbelastung darstellen (auspuffseitige Rauchfahnenentwicklung). Es kamen bislang zumeist Labyrinthdichtungen oder eine Abdichtung mittels Kolbenringen zur Anwendung, die beide mit einer relativ hohen Leckage verbunden sind. Bekannt sind auch Gleitringdichtungsanordnungen (EP-A-1 054 196) wegen deren wesentlich geringeren Leckage.

Für die radiale und axiale Lagerung der Antriebswelle wird in allgemeinen eine ölgeschmierte Gleitlagerung bevorzugt.

Die separaten baulichen Maßnahmen für die Dichtung und Lagerung bedeuten einerseits einen erhöhten baulichen und Montageaufwand für die Erfüllung der Funktionen "Abstützung" und "Abdichtung", wobei es sich bei Ladeverstärkern der vorliegenden Art um typische Großserienprodukte handelt, die geeignet sein sollten, um in Kraftfahrzeugfertigungsstraßen automatisch gehandhabt zu werden. Eine Anforderung dabei ist es, die Anzahl an zu montierenden und handhabenden Teilen so gering wie möglich zu halten.

Hierzu wurde in der EP 1 479 929 A2 eine Axialgleitlageranordnung vorgeschlagen, bei der ein Druckring an einer Seite eine Gleitfläche und an einer entgegengesetzten Seite eine Lagerfläche aufweist. Die Lagerfläche dient zur Lagerung an einem Gegenring. Diese bekannte Anordnung hat sich grundsätzlich bewährt, jedoch wurde festgestellt, dass aufgrund der Reibung zwischen den Lagerflächen des Druckrings und des Gegenrings sehr hohe Temperaturen auftreten können, welche zu einer Verformung des Druckrings führen können. Eine derartige Verformung des Druckrings führt jedoch, da an der der Lagerfläche abgewandten Seite des Druckrings die Gleitfläche für die Gleitringdichtung angeordnet ist, zu einer Verformung der Gleitfläche, was sich nachteilig auf den Dichtspalt zwischen den Gleitringen auswirkt. Hierbei kann im Extremfall der Dichtspalt zu einem V-förmigen Dichtspalt werden, was im Extremfall zu einer Berührung der Gleitflächen und einer sofortigen Beschädigung der Dichtung führen kann.

Es ist daher Aufgabe der vorliegenden Erfindung, eine verbesserte Axialgleitlageranordnung bereitzustellen, welche bei einfachem Aufbau und einfacher, kostengünstiger Herstellbarkeit insbesondere eine sehr lange Lebensdauer aufweist und auch hohen thermischen Anforderungen standhält.

Diese Aufgabe wird erfindungsgemäß durch die Merkmale des Patentanspruches 1 gelöst. Die Unteransprüche zeigen bevorzugte Weiterbildungen der Erfindung.

Infolge des erfindungsgemäßen Aufbaus kann die Axialgleitlageranordnung nicht nur die Funktion einer insbesondere bei hohen bis sehr hohen Drehzahlen wirksamen axialen Abstützung der Antriebswelle übernehmen, sondern gleichzeitig bietet sie die Möglichkeit, zu einer hochwirksamen Gleitringdichtung erweitert bzw. ausgebaut zu werden. Durch das Vorsehen eines mit dem Druckring verbundenen Masserings wird erreicht, dass eine während eines Betriebes der Axialgleitlageranordnung auftretende thermische Verformung des Druckrings kompensiert werden kann. Die Masse des Masserings erzeugt dabei eine Ausgleichskraft, die auf den Druckring wirkt. Insbesondere bewirkt die auf den Massering wirkende Zentrifugalkraft eine Kompensation der aufgrund von Wärme an den Lagerflächen des Druckrings erzeugten thermischen Verformung des Druckrings in Richtung auf den drehfesten Gleitring. Somit kann eine Verengung des Dichtspalts insbesondere an dem radial nach außen gerichteten Umfang der Gleitringdichtung vermieden werden. Somit kann erfindungsgemäß ein Druckring vorgesehen werden, der an einer Seite eine Gleitfläche für die Gleitringdichtung und an der entgegengesetzten Seite eine Lagerfläche für eine Lagerung bereitstellt und trotzdem höchsten thermischen Anforderungen genügt. Durch die Nutzung des Fliehkrafteffekts kann auch eine geringere axiale Baulänge erreicht werden. Der Druckring übernimmt dadurch unter entsprechender Einsparung an Bauteilen gleichzeitig die Funktion des rotierenden Gleitringes einer Gleitringdichtungsanordnung, die im Übrigen einen grundsätzlich herkömmlichen Aufbau aufweisen kann. Ein weiterer Vorteil ist, dass die Montage der Mittel zur axialen Abstützung einer Welle, insbesondere der Antriebswelle eines Ladeverdichters, vereinfacht wird, da die Montage für die beiden Funktionen "axiale Abstützung" und "Dichtung" in einem Zug erfolgen kann. Wenn erwünscht, können der Multi-Funktions-Druckring und der Massering ein integrales Teil einer Wellenbuchse sein oder darauf vormontiert bereitgestellt werden. Die Anordnung aus Dichtung, Lagerung und Wellenbuchse kann als vormontierte Einheit vorgesehen und in eine abzudichtende Bohrung eines Gehäuses, z.B. Ladeverdichtergehäuses, in montagefreundlicher Weise eingeschoben werden. Eine Montage Teil auf Teil am Einsatzort ist ebenfalls problemlos durchzuführen. Ein weiterer Vorteil aus der Ausgestaltung des kombinierten Druck- und Masserings als Multi-Funktions-Bauteil ist, dass die arbeitsintensiven Schleifbearbeitungen an den Lager- und Gleitflächen des Druckringes, ggf. ohne Umspannen, an ein und derselben Bearbeitungsmaschine durchgeführt werden können.

Erfindungsgemäß ist ein Verhältnis der Masse M2 des Druckrings zu einer Masse M1 des Masserings zwischen 1 und 4, und besonders bevorzugt zwischen 1,1 und 1,9 (M2 : M1 = 1 - 4). Hierbei sollte die Masse M1 des Masserings nicht zu klein gewählt werden, um noch ein gewünschtes Ausgleichsmoment bereitstellen zu können und andererseits sollte die Masse M1 des Masserings auch nicht zu groß gewählt werden, um eine Überkompensation der thermischen Verformung zu vermeiden. Eine derartige Überkompensation würde nämlich zu einem sich weitenden Spalt zwischen den Gleitflächen führen, welcher ebenfalls unerwünscht ist. Beispielhaft beträgt das Verhältnis der Masse M2 des Druckrings zur Masse M1 des Masserings 1,13 oder 1,67 oder 1,85 oder 3,53.

Weitere Vorteile und Wirkungen werden aus der nachfolgenden Beschreibung einer Ausführungsform der Erfindung ersichtlich.

Die Erfindung wird nachfolgend anhand einer Ausführungsform und der Zeichnung näher erläutert. Es zeigen:
- Fig. 1: in längsgeschnittener Ansicht eine Axialgleitlageranordnung nach der Erfindung nach Einbau in einem Verdichtergehäuse,
- Fig. 2: in Detailansicht die Gleitfläche eines Druckringes der Gleitringdichtung, und
- Fig. 3: eine vergrößerte Ansicht einer einstückigen Buchse mit Druck- und Massering.

Obschon die Erfindung nachfolgend in Verbindung mit der axialen Abstützung und Abdichtung der Antriebswelle eines Ladeverdichters für Brennkraftmaschinen beschrieben wird, versteht es sich, dass die Erfindung auf dieses Einsatzgebiet nicht beschränkt ist. Die Erfindung kann vielmehr vorteilhaft immer dann eingesetzt werden, wenn eine mit hoher Drehzahl betriebene Welle mit vergleichsweise geringem Durchmesser in reibungsminimierender Weise gegenüber einem Gehäuse abgestützt und abgedichtet werden soll und das abzudichtende Medium ein Gas, wie Luft, ist.

Die Axialgleitlageranordnung nach der Erfindung umfasst einen als Gleitlager ausgebildeten Axiallagerbereich und einen Dichtungsbereich als Bestandteil einer Gleitringdichtung. Die Gleitringdichtung umfasst in an sich bekannter Weise einen drehgesichert, jedoch axial beweglich, koaxial zu einer Welle 2 gehaltenen Gleitring 3 und einen auf der Welle 2 zur gemeinsamen Drehung mit dieser angeordneten Ring 4, der erfindungsgemäß als Druckring des Axiallagerbereich ausgebildet ist. Die Ringe 3, 4 haben im Wesentlichen radiale, einander zugewandte Gleitflächen 5, 6. In wenigstens einer der Gleitflächen 5, 6, vorzugsweise in der Gleitfläche 6 des Druckringes 4, sind drehrichtungsabhängige, gasförderwirksame Strukturen oder Ausnehmungen 7 durch bekannte Techniken, wie Schleifen, Lasern oder Prägen, eingebracht, um bei Drehung der Welle 2 ein Gas zwischen die Gleitflächen 5, 6 zu pumpen und einen Druck aufzubauen. Infolge davon wird unter Trennung der Gleitflächen 5, 6 zwischen diesen ein Gaspolster bildet, um einen Raum oder Bereich A innenumfänglich gegenüber einem Raum oder Bereich B außenumfänglich der Gleitflächen 5, 6 abzudichten.

Der drehfeste Gleitring 3 ist in einem an einem Verdichtergehäuse 1 in nicht gezeigter Weise stationär montierten Montagegehäuse 8 aufgenommen und dagegen durch eine Sekundärdichtung 9 in Gestalt eines O-Ringes abgedichtet.

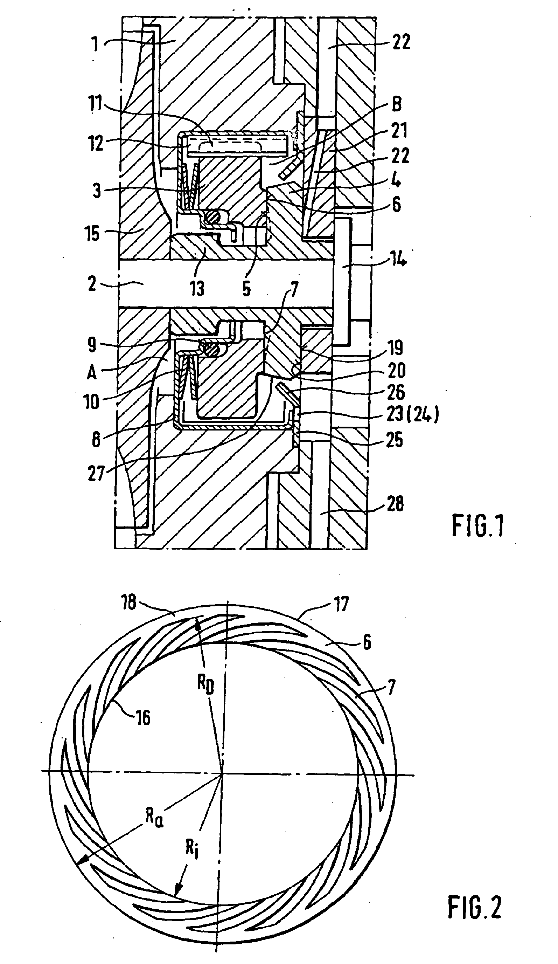

Zwischen dem Montagegehäuse 8 und dem drehfesten Gleitring 3 wirkt ferner eine Federvorspanneinrichtung 10, bei der es sich um eine oder mehrere Wellfedern handeln kann, wie dies in Fig. 1 gezeigt ist. Die Federvorspanneinrichtung 10 bewirkt, dass der drehfeste Gleitring 3 gegen den mit der Welle 2 rotierenden Druckring 4 mit einer geeigneten Vorspannkraft beaufschlagt ist, so dass bei Stillstand der Welle 2 die Gleitflächen 5, 6 der Ringe 3, 4 in dichtendem Eingriff miteinander gehalten sind. Der drehfeste Gleitring 3 weist an seinem äußeren Umfang eine axial sich erstreckende Nut 11 auf (es können auch mehrere derartige Nuten umfänglich verteilt vorgesehen sein), in die ein vom Montagegehäuse 8 radial gegen den Gleitring 3 abstehender Mitnehmerfinger 12 hineinragt. Der drehfeste Gleitring 3 ist demzufolge zwar an einer Relatiwerdrehung zum Montagegehäuse 8 gehindert, er kann jedoch eine axiale Bewegung vornehmen.

Der rotierende Druckring 4 kann in irgendeiner geeigneten Weise auf der Welle 2 zur gemeinsamen Drehung mit dieser montiert sein. Bei der vorliegenden Ausführungsform ist er integrales Teil einer auf der Welle 2 aufgesetzten Buchse 13, die axial zwischen einem Wellenabsatz 14 und einem an der Welle 2 montierten Verdichterlaufrad 15 eingeklemmt ist, so dass sich die Drehung der Welle 2 schlupffrei auf den Druckring 4 übertragen lässt. Der Druckring 4 könnte auch als separates, auf der Welle 2 oder einer Wellenbuchse montiertes Bauteil ausgebildet sein.

Bevorzugte Materialien für den Druckring 4 sind hochfeste Werkstoffe wie geeignete Stahlmaterialien mit oder ohne gleitflächenseitiger Beschichtung. Der stationäre Gleitring 3 besteht zum Zwecke der Verschleißminimierung vorzugsweise aus tribologisch wirksamen Materialien wie einem geeigneten Kohlenstoffmaterial, und kann, wenn erwünscht, gleitflächenseitig nach bekannten Verfahren antimonimprägniert sein.

Die gasförderwirksamen Ausnehmungen 7 in der Gleitfläche 6 des Druckringes 4 sind in großer Anzahl in gleichem Abstand umfänglich verteilt vorgesehen. Jede gasförderwirksame Ausnehmung 7 erstreckt sich vom inneren Umfang 16 mit dem Radius Rᵢ der Gleitfläche 6 pflugscharartig gekrümmt bis zu einem radialen Radius R_{D} der Gleitfläche 6, der in einem radialen Abstand von deren äußeren Umfang 17 mit dem Radius Rₐ steht, so dass ein Dammbereich 18 mit dem Radius R_{D} nahe dem äußeren Umfang 17 verbleibt, der frei von gasförderwirksamen Ausnehmungen 7 ist.

Das Verhältnis der von den gasförderwirksamen Ausnehmungen 7 bedeckten Fläche F_{GFA} zur Gesamtfläche F_{G} der Gleitfläche 6 ist vorzugsweise so abgestimmt, dass sowohl bei normalem Betrieb als auch beim Anlaufen und während der Stillsetzung der Welle 2, selbst bei geringen Wellendurchmessern von z.B. 8 bis 25 mm, eine direkte Berührung zwischen den Gleitflächen 5, 6 vermieden wird, indem dazwischen mit Hilfe der gasförderwirksamen Ausnehmungen 7 ein abdichtendes Gaspolster aufgebaut wird. Es wurde festgestellt, dass diese Wirkungen erhalten werden, wenn bestimmte Faktoren für das Flächenverhältnis F_{GFA /} F_{G} eingehalten werden. Insbesondere sollte das Flächenverhältnis im Bereich zwischen 0,35 und 0,65, vorzugsweise 0,4 und 0,6 liegen. Ferner sollten die radialen Abmessungen (Rₐ -Rᵢ) der Gleitfläche 6 einen minimalen Betrag nicht unterschreiten und die radialen Abmessungen (Rₐ - R_{D}) des Dammbereiches 18 minimal gehalten werden. Längs des Umfangs der Gleitfläche 6 können z.B. sechzehn gasförderwirksame Ausnehmungen 7 mit pflugscharartig verlaufenden voreilenden und nacheilenden Kanten vorgesehen sein.

Es wurde ferner festgestellt, dass besonders vorteilhafte Betriebseigenschaften des Dichtungsbereiches erzielt werden, wenn ein Belastungsverhältnis k, definiert als das Verhältnis einer hydraulischen, durch den Druck des abzudichtenden Mediums beaufschlagten Wirkfläche des Dichtungsbereiches zur Fläche der Gleitfläche in einem bestimmten Bereich k = 0,5 bis 1,2 liegt.

Bezüglich weiterer Details zu geeigneten radialen Abmessungen (Rₐ -Rᵢ) der Gleitfläche 6 und radialen Abmessungen (Rₐ - R_{D}) des Dammbereiches 18 kann auf die EP-A-1 054 196 verwiesen werden.

Dass die gasförderwirksamen Ausnehmungen 7 bevorzugt vom inneren Umfang 16 der Gleitfläche 6 ausgehen, hat seinen Grund darin, dass das abzudichtende Medium im Bereich A praktisch frei von nicht-gasförmigen Bestandteilen, z.B. Ölpartikeln, ist, die, wenn sie in den Bereich zwischen den Gleitflächen 5, 6 gelangen würden, schädliche Auswirkungen auf das Betriebsverhalten des Dichtungsbereiches ausüben können. Dagegen ist der Anteil an nicht-gasförmigen Bestandteilen, z.B. Ölpartikeln, im atmosphärenseitigen gasförmigen Medium, z.B. der Luft im Raum B zwar gering, jedoch nicht vernachlässigbar, worauf nachfolgend näher eingegangen wird. Die Ausmündung der gasförderwirksamen Ausnehmungen 7 am inneren Umfang der Gleitfläche 6 gewährleistet eine Leckageströmung des abzudichtenden Mediums vom Raum A in Richtung auf den Raum B und verhindert dadurch wirksam ein Eindringen von nicht-gasförmigen Bestandteilen aus dem Raum B in den Raum A.

Wie in Fig. 1 ferner gezeigt ist, ist der Druckring 4 an seiner der Gleitfläche 6 abgewandten Stirnseite mit einer im Wesentlichen radial ausgerichteten Lagerfläche 19 versehen, die mit einer gegenüberliegenden parallel ausgerichteten Lagerfläche 20 eines am Gehäuse 1 drehfest montierten Gegenringes 21 des Axiallagerbereiches zusammenwirkt, um ein Axialgleitlager zu bilden. Während des Betriebes der Axialgleitlageranordnung wird zwischen den Lagerflächen 19, 20 ein Ölfilm gebildet, der in einer in der Gleitlagertechnik bekannten Weise eine verschleißminimierte Relativbewegung zwischen den Lagerflächen 19, 20 ermöglicht.

Die Ölfilmbildung kann dadurch gefördert werden, dass in den Bereich zwischen den Lagerflächen 19, 20 ein Lageröl über eine Ölzuführpassage 22, die vorzugsweise am oder nahe dem inneren Umfang der Lagerfläche 20 des Gegenringes 21 ausmündet, zugeführt wird. Beim Betrieb der Axialgleitlageranordnung wird das Lageröl infolge der einwirkenden Zentrifugalkräfte zu einer Bewegung vom inneren zum äußeren Umfang der Lagerflächen 19, 20 veranlasst. Das Lageröl wird vorzugsweise über ein oder mehrere Passagen 22, die den Gegenring 21 durchsetzen, mit einem geringen Überdruck von z.B. 1 bis 2 bar zugeführt und verlässt die Lagerflächen 19, 20 am äußeren Umfang des Druckringes 4 in einem im Wesentlichen drucklosen Zustand. Beim Lageröl kann es sich um das Betriebsöl (Motoröl) einer Brennungskraftmaschine handeln; es könnte jedoch auch eine separate Ölversorgungsquelle vorgesehen sein.

Der Gegenring 21 besteht vorzugsweise aus einem geeigneten Lagermaterial, wie Bronze. Die Lagerflächen 19, 20 sind in geeigneter Weise geschliffen. Vorzugsweise hat die Lagerfläche 19 des Druckringes 4 zur Verbesserung der Laufeigenschaften gegenüber dem Gegenring 21 einen Kreuzschliff.

Eine Ölrückhalteeinrichtung 23 ist vorgesehen, die verhindert, dass das am äußeren Umfang der Lagerflächen 19, 20 austretende Lageröl ungehindert in den Raum B geschleudert werden kann, um eine übermäßige Belastung des Raumes B mit Lagerölpartikeln zu verhindern. Obschon andere derartige Einrichtungen vorgesehen werden könnten, umfasst die in der Zeichnung gezeigte bevorzugte Ölrückhalteeinrichtung 23 ein Winkelblech 24, das mit einem radialen Schenkel 25 am Gehäuse 1 bzw. Gegenring 21 in geeigneter Weise befestigt, z.B. angeschraubt ist, und einen abgewinkelten Schenkel 26 hat, der dachartig die Austrittsstelle des Lageröls am äußeren Umfang der Lagerflächen 19, 20 sowie wenigstens einen Teil des äußeren Umfanges des Druckringes 4 außen in einem radialen Abstand umfasst bzw. überdeckt. Das aus den Lagerflächen 19, 20 im Wesentlichen radial herausgeschleuderte Lageröl trifft daher auf den abgewinkelten Schenkel 26 des Winkelbleches 24 und wird zurück nach innen geleitet, so dass nur ein geringer Teil des Lageröls, wenn überhaupt, in den Bereich nahe den Gleitflächen 5, 6 des Dichtungsbereiches gelangen kann.

Zur Verstärkung der Ölrückhaltewirkung kann ferner der äußere Umfang des Druckringes 4, wie dargestellt, eine im Querschnitt spitzdachförmige Konfiguration haben, wie dies bei 27 angedeutet ist, so dass eine radial nach außen weisende Spritzkante gebildet ist, die einen Zugang des Lageröls zu den Gleitlagerflächen 5, 6 weiter verengt.

Das aus den Lagerflächen 19, 20 ausgetretene und durch die Ölrückhalteeinrichtung 23 an einer Verbreitung im Raum B gehinderte Lageröl kann sich an einer unteren Stelle oder Wanne (nicht bezeichnet) der Axialgleitlageranordnung ansammeln und von dort über eine Ölabführpassage 28 nach außen, z.B. zum Motorraum der Brennungskraftmaschine zurückgeführt werden.

Anstelle der in Fig. 1 gezeigten und beschriebenen Ölrückhalteeinrichtung könnte auch eine auf Zentrifugalwirkung basierende Ölrückhalteeinrichtung vorgesehen werden, wie sie in der EP-A-1 054 196 beschrieben ist, so dass darauf Bezug genommen werden kann.

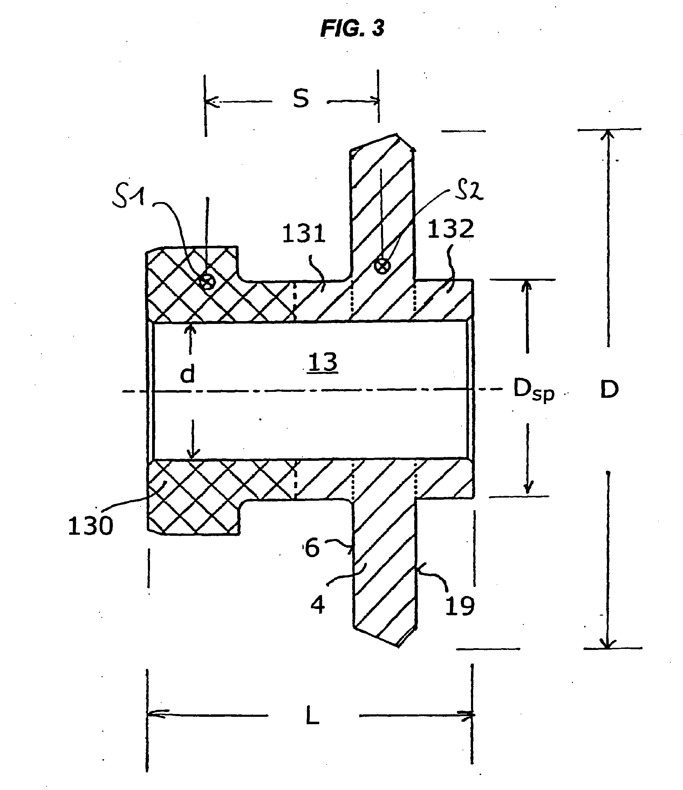

Fig. 3 zeigt die Buchse 13 der Axialgleitlageranordnung gemäß der Erfindung im Detail. Wie aus Fig. 3 ersichtlich ist, umfasst die Buchse 13 einen Massering 130, welcher in einem axialen Abstand zum Druckring 4 angeordnet ist. Der Massering 130 ist dabei in Axialrichtung an der die Gleitfläche 6 aufweisenden Seite des Druckrings 4 angeordnet. In Fig. 3 ist der Massering 130 durch die kreuzweise dargestellte Schraffur definiert. Ferner umfasst die Buchse 13 einen ersten Zwischenring 131 und einen zweiten Zwischenring 132. Der erste Zwischenring 131 ist zwischen dem Massering 130 und dem Druckring 4 angeordnet und der zweite Zwischenring 132 ist am Druckring 4 in Axialrichtung an der die Lagerfläche 19 aufweisenden Seite angeordnet. Die Buchse 13 bildet somit ein einstückiges Multi-Funktions-Bauteil mit Massering 130 und Druckring 4 und kann besonders einfach hergestellt werden und insbesondere sehr schnell und kostengünstig montiert werden. Zur Abgrenzung vom Massering, erstem Zwischenring 131, Druckring 4 und zweitem Zwischenring 132 sind in Fig. 3 in der einstückigen Buchse 13 gestrichelte Linien eingezeichnet. Hierbei sei angemerkt, dass die Zwischenringe 131, 132 eine gleiche axiale Länge aufweisen und auch sonst gleiche Abmessungen haben.

In Fig. 3 ist ferner ein Schwerpunkt des Masserings 130 mit S1 bezeichnet und ein Schwerpunkt des Druckrings 4 mit S2 bezeichnet. S definiert dabei einen axialen Abstand der Schwerpunkte S1, S2, d bezeichnet einen Innendurchmesser der Buchse 13, Dₛₚ bezeichnet einen Außendurchmesser der Zwischenringe 131, 132 und D bezeichnet einen maximalen Außendurchmesser des Druckrings 4. L bezeichnet eine Axiallänge der Buchse 13.

Während der Rotation der Buchse 13 übt der Massering 130 ein Moment auf den Druckring 4 auf, um den Druckring 4 insbesondere im Bereich der Gleitfläche 6 etwas zu deformieren, so dass der Druckring 4 von der Gleitfläche 5 des drehfesten Gleitrings 3 weggedrückt wird. Dieses Moment des Masserings 130 wird aufgrund der Zentrifugalkräfte, welche auf den Massering 130 wirken, erzeugt. Somit resultiert die Deformation des Druckrings 4 aus den Zentrifugalkräften, die auf den Massering 130 wirken, um eine thermische Verformung des Druckrings 4, welche aufgrund der Reibungswärme, die sich am Axiallagerbereich zwischen dem Druckring 4 und dem Gegenring 21 ergeben kann, zu kompensieren. Diese Reibungswärme wird über die Lagerfläche 19 des Druckrings 4 in diesen, insbesondere in den radial nach außen liegenden Endbereich des Druckrings 4, eingebracht. Ohne das Vorsehen des Masserings 130, welcher eine Kompensation der thermischen Verformung ausführt, würde dann aufgrund der thermischen Verformung des Druckrings 4 ein Dichtspalt zwischen den Gleitflächen 5, 6 des Druckrings 4 und des Gleitrings 3 nicht mehr konstant über die radiale Länge sein, sondern sich in Richtung radial nach außen, z.B. V-förmig, verjüngen. Dies kann jedoch im Extremfall während der Rotation zu einem Kontakt zwischen den Gleitflächen 5, 6 führen, was einen erhöhten Abrieb der Gleitringdichtung zur Folge hat, so dass die Lebensdauer der Anordnung signifikant reduziert wird.

Aufgrund der Lagerreibung ist die Temperatur des Druckrings 4 im Allgemeinen an der Lagerfläche 19 deutlich höher als die Temperatur an der Gleitfläche 5. Im Betrieb führt eine derartige Temperaturdifferenz am Druckring 4 jedoch zu einer thermischen Verformung des Druckrings 4 in Richtung des Gleitrings 3. Dies resultiert in einer Verengung des Spalts zwischen den Gleitflächen 5, 6, welche jedoch für eine problemlose Funktion der Gleitringdichtung möglichst parallel sein sollten. Hiergegen erzeugt das Moment des Masserings 130 eine Gegenkraft, um eine derartige thermische Verformung zu kompensieren und die parallele Ausrichtung der Gleitflächen aufrecht zu erhalten.

Somit kann erfindungsgemäß der Druckring 4 und insbesondere die Gleitfläche 6 des Druckrings 4 weiterhin parallel zur Gleitfläche 5 des Gleitrings 3 gehalten werden, so dass eine Funktion der Gleitringdichtung auch bei höchsten Drehzahlen (und damit höchsten Wärmebelastungen) aufrechterhalten werden kann.

Das kompensatorische Moment des Masserings 130 erhöht sich dabei mit steigenden Drehzahlen der Buchse 13. Da sich bei höheren Drehzahlen der Buchse 13 ebenfalls ein höherer Eintrag von Reibungswärme in den Druckring 4 aus Richtung der Lagerseite ergibt, kann somit automatisch ein höheres Moment durch den Massering 130 für eine Kompensation bereitgestellt werden. Somit ist die erfindungsgemäße Buchse mit Masse- und Druckring insbesondere auch für variierende Drehzahlen problemlos einsetzbar, wie sie beispielsweise bei Turboladern für Brennkraftmaschinen auftreten. Erfindungsgemäß können insbesondere auch die aufgrund der hohen Drehzahlen von Ladern erzeugte Lagerwärme sicher kompensiert werden.

Es sei ferner angemerkt, dass die beiden Zwischenringe 131, 132 hinsichtlich ihrer Masse und ihrer Position derart angeordnet sind, dass sie im Wesentlichen das gleiche Moment auf den Druckring 4 an einander gegenüberliegenden Seiten ausüben, so dass sich die Wirkungen der Zwischenringe neutralisieren.

Die Abmessungen der Buchse 13 sind vorzugsweise derart gewählt, dass ein Verhältnis des axialen Abstandes S der beiden Schwerpunkte S1 und S2 zu einer Gesamt-Axiallänge L der Buchse 13 zwischen 0,4 und 0,6 liegt und vorzugsweise 0,54 beträgt (S : L = 0,4 - 0,6). Im dargestellten Ausführungsbeispiel ist ein axialer Abstand der Schwerpunkte S 6mm und eine Gesamtlänge L 11 mm. Ferner beträgt ein Innendurchmesser d der Buchse 13 5mm und ein maximaler Außendurchmesser D im Bereich des Druckrings 4 17mm. Weiter beträgt eine Masse M1 des Masserings 130 ca. 2,9g und eine Masse M2 des Druckrings 4 ca. 4,2g.

Die Drehzahlen, denen die Buchse 13 während des Betriebs ausgesetzt ist, betragen dabei bis zu 10⁵ U/min. Die Buchse 13 wird dabei besonders bevorzugt als einstückiges Bauteil hergestellt und insbesondere bei Aufladevorrichtungen für Brennkraftmaschinen, z.B. Abgasturboladern, verwendet.

Obschon die Erfindung vorausgehend anhand einer Ausführungsform beschrieben wurde, bei der die gasförderwirksamen Ausnehmungen vom inneren Umfang der Gleitfläche ausgehen, könnte auch eine Umkehrung der Verhältnisse vorgesehen sein, wenn ein Zutritt von nicht-gasförmigen Bestandteilen im Raum B über den Dichtspalt in den Raum A nicht zu befürchten ist. Ferner könnten die gasförderwirksamen Ausnehmungen statt im Druckring auch im drehfesten Gleitring, ggf. auch in beiden Ringen, eingebracht sein. Diese und andere sich dem Fachmann anhand der gegebenen Lehre anbietenden Modifikationen sind daher von der vorliegenden Erfindung ebenso umfasst wie die Möglichkeit der Aufnahme von Merkmalen aus der vorausgehenden Beschreibung der Erfindung in das Schutzbegehren.

## Patentansprüche

1. Axialgleitlageranordnung mit
- einem zur gemeinsamen Drehung mit einem rotierenden Bauteil vorgesehenen Druckring (4),
- einem zur drehfesten Montage an einem stationären Bauteil vorgesehenen Gegenring (21), wobei der Druckring (4) und der Gegenring (21) einander zugewandte Lagerflächen (19, 20) aufweisen, und
- einem drehfesten Gleitring (3) mit einer radialen Gleitfläche (5),
- wobei der Druckring (4) ferner mit einer radialen Gleitfläche (6) an einer dem Gegenring (21) abgewandten Stirnfläche zum Zusammenwirken mit der radialen Gleitfläche (5) des drehfesten Gleitrings (3) versehen ist, und der Druckring (4) und der Gleitring (3) eine gasgeschmierte Gleitringdichtungsanordnung bilden, um das rotierende Bauteil und das stationäre Bauteil gegeneinander abzudichten,
- wobei in der radialen Gleitfläche (5, 6) des Druckrings (4) und/oder des feststehenden Gleitrings (3) eine Vielzahl umfänglich beabstandeter gasförderwirksamer Ausnehmungen (7) vorgesehen sind, die sich von einem Umfang der betreffenden Gleitfläche in Richtung auf den anderen Umfang erstrecken und in einem radialen Abstand vom anderen Umfang enden, und
- wobei ein mit dem Druckring (4) verbundener Massering (130) an einer vom Gegenring (21) abgewandten Seite des Druckrings (4) in einem axialen Abstand vom Druckring (4) vorgesehen ist,
**dadurch gekennzeichnet, dass**
- der Massering (130) ausgelegt ist, eine Ausgleichskraft auf den Druckring (4) bei Vorhandensein von Zentrifugalkräften, welche auf den Massering (130) während einer gemeinsamen Rotation des Masserings (130) und des Druckrings (4) wirken, auszuüben, um eine thermische Verformung des Druckrings (4) im Betrieb zu kompensieren, wobei ein Verhältnis einer Masse M2 des Druckrings (4) zu einer Masse M1 des Masserings (130) zwischen 1,0 und 4,0 liegt und insbesondere zwischen 1,1 - 1,9 liegt.

2. Axialgleitlageranordnung nach Anspruch 1, **dadurch gekennzeichnet, dass** der Massering (130) und der Druckring (4) als einstückiges Bauteil (13) ausgebildet sind.

3. Axialgleitlageranordnung nach Anspruch 1 oder 2, **dadurch gekennzeichnet, dass** zwischen dem Massering (130) und dem Druckring (4) ein erster Zwischenring (131) angeordnet ist, wobei der erste Zwischenring (131) eine geringere Masse als der Massering und als der Druckring aufweist.

4. Axialgleitlageranordnung nach Anspruch 3, ferner umfassend einen zweiten Zwischenring (132), welcher an einer dem Massering (130) abgewandten Seite des Druckrings (4) angeordnet ist.

5. Axialgleitlageranordnung nach Anspruch 4, **dadurch gekennzeichnet, dass** der erste Zwischenring (131) und der zweite Zwischenring (132) die gleichen Abmessungen und die gleichen Massen aufweisen.

6. Axialgleitlageranordnung nach einem der vorhergehenden Ansprüche, **dadurch gekennzeichnet, dass** ein Abstand (S) in Axialrichtung zwischen einem Schwerpunkt (S1) des Masserings (130) und einem Schwerpunkt (S2) des Druckrings (4) zu einer gesamten axialen Länge (L) von Masse- und Druckring zwischen 0,4 und 0,6 liegt, bevorzugt zwischen 0,44 - 0,52 liegt, und insbesondere 0,48 beträgt.

7. Axialgleitlageranordnung nach einem der vorhergehenden Ansprüche, **dadurch gekennzeichnet, dass** ein Schwerpunkt (S2) des Druckrings (4) radial weiter außen als ein Schwerpunkt (S1) des Masserings (130) liegt und ein Verhältnis der Radialposition der Schwerpunkte S2 : S1 = 1,3 - 1,9 ist, vorzugsweise S2 : S1 = 1,4 - 1,8 ist und insbesondere 1,6 ist.

8. Aufladevorrichtung für eine Brennkraftmaschine, umfassend eine Anordnung nach einem der vorhergehenden Ansprüche.

## Claims

1. An axial plain bearing assembly, comprising
- a thrust ring (4) provided for common rotation with a rotary component,
- a counter ring (21) provided for mounting non-rotationally on a stationary component, said thrust ring (4) and said counter ring (21) having bearing faces (19, 20) facing each other, and
- a non-rotational seal ring (3) having a radial seal face (5),
- said thrust ring (4) further having a radial seal face (6) on an end face thereof remote from the counter ring (21) for co-operating with the radial seal face (5) of the non-rotational seal ring (3), and said thrust ring (4) and said seal ring (3) forming a gas-lubricated mechanical face seal assembly for sealing said rotary component and said stationary component against each other,
- wherein a plurality of peripherally spaced gas-pumping grooves (7) are formed in the radial seal faces (5, 6) of the thrust ring (4) and/or of the non-rotational seal ring (3), said grooves extending from one circumference of the respective seal face towards the other circumference thereof and terminating at a radial distance from the other circumference, and
- wherein a mass ring (130) connected with the thrust ring (4) is provided at a side of the thrust ring (4) remote from the counter ring (21) at an axial distance from the thrust ring (4),
**characterized in that**
- the mass ring (130) is configured to exert a balancing force on the thrust ring (4) under centrifugal forces acting on the mass ring (130) during common rotation of the mass ring (130) and the thrust ring (4), to compensate for thermal distortion of the thrust ring (4) during operation, wherein a ratio of the mass M2 of the thrust ring (4) with respect to a mass M1 of the mass ring (130) ranges between 1.0 and 4.0, and in particular between 1.1 and 1.9.

2. The axial plain bearing assembly of claim 1, **characterized in that** the mass ring (130) and the thrust ring (4) are formed as an integral component (13).

3. The axial plain bearing assembly of claim 1 or 2, **characterized in that** a first spacer ring (131) is disposed between the mass ring (130) and the thrust ring (4), the first spacer ring (131) having a smaller mass than the mass ring and the thrust ring.

4. The axial plain bearing assembly of claim 3, further comprising a second spacer ring (132) disposed at a side of the thrust ring (4) remote from the mass ring (130).

5. The axial plain bearing assembly of claim 4, **characterized in that** the first spacer ring (131) and the second spacer ring (132) have identical dimensions and identical masses.

6. The axial plain bearing assembly of one of the preceding claims, **characterized in that** a distance (S) in the axial direction between a center of gravity (S1) of the mass ring (130) and a center of gravity (S2) of the thrust ring (4) with respect to an overall axial length (L) of the mass ring and the thrust ring ranges between 0.4 and 0.6, preferably between 0.44 and 0.52, and most preferably 0.48.

7. The axial plain bearing assembly of one of the preceding claims, **characterized in that** a center of gravity (S2) of the thrust ring (4) is arranged radially farther to the outside than a center of gravity (S1) of the mass ring (130) and a ratio of the radial positions of the centers of gravity S2:S1 = 1.3 to 1.9, preferably S2:S1 = 1.4 to 1.8, and most preferably 1.6.

8. A compressor for an internal combustion engine, comprising an assembly according to one of the preceding claims.

## Revendications

1. Agencement de palier de glissement axial, comprenant une bague de pression (4) prévue pour tourner conjointement à une pièce structurelle rotative,
une bague de contre-appui (21) prévue pour être montée sur une pièce structurelle stationnaire, avec verrouillage rotatif, ladite bague de pression (4) et ladite bague de contre-appui (21) étant pourvues de surfaces de portée (19, 20) en vis-à-vis mutuel, et
une bague de glissement (3) à blocage antirotation, pourvue d'une surface radiale de glissement (5),
sachant que ladite bague de pression (4) est en outre munie d'une surface radiale de glissement (6) à une face extrême ou frontale tournée à l'opposé de la bague de contre-appui (21), en vue de la coopération avec ladite surface radiale de glissement (5) de ladite bague de glissement (3) à blocage antirotation, et sachant que ladite bague de pression (4) et ladite bague de glissement (3) forment un ensemble d'étanchement de bague de glissement à lubrification gazeuse, en vue d'assurer l'étanchéité réciproque de ladite pièce structurelle rotative et de ladite pièce structurelle stationnaire,
sachant que la surface radiale de glissement (5, 6) de ladite bague de pression (4) et/ou de ladite bague fixe de glissement (3) est dotée d'une multiplicité d'évidements (7) espacés dans le sens périphérique, qui exercent un effet d'acheminement de gaz, s'étendent à partir d'une périphérie de la surface de glissement considérée, en direction de l'autre périphérie, et s'achèvent radialement à distance de ladite autre périphérie, et
sachant qu'une bague d'équilibrage (130), reliée à ladite bague de pression (4), est prévue axialement à distance de ladite bague de pression (4) sur un côté de ladite bague de pression (4) qui pointe à l'opposé de ladite bague de contre-appui (21), **caractérisé par le fait que**
ladite bague d'équilibrage (130) est conçue pour appliquer une force de compensation à ladite bague de pression (4) en présence de forces centrifuges agissant sur ladite bague d'équilibrage (130) au cours d'une rotation conjointe de ladite bague d'équilibrage (130) et de ladite bague de pression (4), en vue de compenser une déformation thermique de ladite bague de pression (4) en service, un rapport, entre une masse M2 de ladite bague de pression (4) et une masse M1 de ladite bague d'équilibrage (130), étant compris entre 1,0 et 4,0 et, en particulier, entre 1,1 et 1,9.

2. Agencement de palier de glissement axial selon la revendication 1, **caractérisé par le fait que** la bague d'équilibrage (130) et la bague de pression (4) sont réalisées sous la forme d'une pièce structurelle monobloc (13).

3. Agencement de palier de glissement axial selon la revendication 1 ou 2, **caractérisé par le fait qu'**une première bague intercalaire (131) est interposée entre la bague d'équilibrage (130) et la bague de pression (4), ladite première bague intercalaire (131) présentant une masse moindre que celle de ladite bague d'équilibrage et que celle de ladite bague de pression.

4. Agencement de palier de glissement axial selon la revendication 3, englobant par ailleurs une seconde bague intercalaire (132) située d'un côté de la bague de pression (4) qui pointe à l'opposé de la bague d'équilibrage (130).

5. Agencement de palier de glissement axial selon la revendication 4, **caractérisé par le fait que** la première bague intercalaire (131) et la seconde bague intercalaire (132) présentent les mêmes dimensions et les mêmes masses.

6. Agencement de palier de glissement axial selon l'une des revendications précédentes, **caractérisé par le fait qu'**une distance (S) entre un centre de gravité (S1) de la bague d'équilibrage (130) et un centre de gravité (S2) de la bague de pression (4), dans le sens axial, représente entre 0,4 et 0,6, de préférence entre 0,44 et 0,52, et notamment 0,48 rapportée à une longueur axiale totale (L) desdites bagues d'équilibrage et de pression.

7. Agencement de palier de glissement axial selon l'une des revendications précédentes, **caractérisé par le fait qu'**un centre de gravité (S2) de la bague de pression (4) se trouve davantage à l'extérieur, dans le sens radial, qu'un centre de gravité (S1) de la bague d'équilibrage (130), et un rapport entre les positions radiales desdits centres de gravité est exprimé par S2 : S1 = 1,3 - 1,9, de préférence par S2 : S1 = 1,4 - 1,8, et est notamment de 1,6.

8. Dispositif de suralimentation pour un moteur à combustion interne, comprenant un agencement selon l'une des revendications précédentes.
